# EUROPEAN PATENT APPLICATION

(11) **EP 4 568 380 A1**
(43) Date of publication of application: **11.06.2025**
(21) Application number: 23849092.4
(22) Date of filing: 28.06.2023
(51) Int. Cl.: H04W 72/04

(54) **METHOD AND APPARATUS FOR DETERMINING PRIORITY OF LOGIC CHANNEL, AND STORAGE MEDIUM**

(30) Priority: 02.08.2022 CN 202210922817
(71) Applicant: Datang Mobile Communications Equipment Co., Ltd., Beijing 100085 (CN)
(72) Inventor: ZHAO, Yali, Beijing 100085 (CN); BERTRAND, Pierre, Beijing 100085 (CN); CHEN, Li, Beijing 100085 (CN)
(74) Representative: Studio Torta S.p.A.
(86) International application number: PCT/CN2023/103222
(87) International publication number: WO 2024/027382

(57) **Abstract**

Provided in the embodiments of the present disclosure are a method and apparatus for determining the priority of a logic channel, and a storage medium. The method comprises: determining the priority of a logical channel on the basis of an initial priority of the logical channel and/or the priority of a packet data unit set, which belongs to the logical channel.

## Description

### CROSS-REFERENCES TO RELATED APPLICATIONS

The present application claims priority to Chinese application No. 202210922817.9 filed on August 02, 2022, entitled "Method and Apparatus for Determining Priority of Logic Channel, and Storage Medium", which is hereby incorporated by reference in its entirety.

### FIELD

The present application relates to the field of communications, and in particular, to methods and apparatuses for determining a priority of a logical channel, and a storage medium.

### BACKGROUND

In view of characteristics of extended reality (XR), a packet data unit (PDU) set (PDU set)is introduced into a core network.

In traditional communication systems, all data in a logical channel have basically the same priorities, and a priority of the logical channel is the same as a priority of the data in the logical channel. However, for XR services, there may be PDU sets in a logical channel. Scheduling a transmission of packet data completely based on an initial priority of the logical channel fails to guarantee that a PDU set with a higher priority may be transmitted in time, which affects service experience.

### BRIEF SUMMARY

In response to problems in the related art, embodiments of the present application provide methods and apparatuses for determining a priority of a logical channel, and a storage medium.

An embodiment of the present application provides a method for determining priority of logical channel, including:
determining a priority of a logical channel based on an initial priority of the logical channel and/or a priority of a packet data unit set belonging to the logical channel.

In an embodiment, the initial priority of the logical channel includes:
an initial priority of a logical channel configured by a network device; or,
an initial priority of a logical channel determined based on preconfiguration information or system information transmitted from a network device.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, determining the priority of the logical channel based on the priority of the packet data unit set belonging to the logical channel includes any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

In an embodiment, the method further includes:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

In an embodiment, determining the priority of the logical channel based on the initial priority of the logical channel and the priority of the packet data unit set belonging to the logical channel includes any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

In an embodiment, the method further include:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

In an embodiment, the method further include:
transmitting assistance information to a network device, where the assistance information is used to assist in determining the initial priority of the logical channel.

In an embodiment, the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the method further include:
determining, based on configuration information from a network device, a way for determining the priority of the logical channel; or
determining a way for determining the priority of the logical channel.

In an embodiment, determining the way for determining the priority of the logical channel includes:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

In an embodiment, the method further include:
performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

In an embodiment, the transmission conflict includes:
a transmission conflict between data transmission corresponding to an uplink and data transmission corresponding to a sidelink; or
a transmission conflict between different configured grants corresponding to an uplink or a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

In an embodiment, the configuration information is configured based on a Uu interface, or a sidelink, or a Uu interface logical channel, or a sidelink logical channel.

An embodiment of the present application further provides a method for determining priority of logical channel, including:
transmitting configuration information to a terminal, where the configuration information is used to configure a method for determining priority of logical channel performed by the terminal, where the method comprises:
determining the priority of the logical channel based on an initial priority of a logical channel and/or a priority of a packet data unit set belonging to the logical channel.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information includes a way for determining the priority of the logical channel based on the priority of the packet data unit set belonging to the logical channel.

In an embodiment, the way for determining the priority of the logical channel based on the priority of the packet data unit set belonging to the logical channel includes any of the following:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

In an embodiment, the configuration information includes a way for determining the priority of the logical channel based on the initial priority of the logical channel and the priority of the packet data unit set belonging to the logical channel.

In an embodiment, the way for determining the priority of the logical channel based on the initial priority of the logical channel and the priority of the packet data unit set belonging to the logical channel includes any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, the method further include:
configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
transmitting one or more of the initial priority of the logical channel, the weighted coefficient corresponding to the initial priority of the logical channel in the weighted average value, or the weighted coefficient corresponding to the priority of packet data unit set belonging to the logical channel in the weighted average value to the terminal.

In an embodiment, the method further include:
receiving assistance information transmitted from the terminal, where the assistance information is used to assist in determining the initial priority of the logical channel.

In an embodiment, the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information is configured based on a Uu interface, or a sidelink, or a Uu interface logical channel, or a sidelink logical channel.

An embodiment of the present application further provides a terminal, including a memory, a transceiver and a processor, where
the memory is used for storing a computer program, the transceiver is used for receiving and transmitting data under control of the processor and the processor is used for reading the computer program in the memory and performing the following operations:
determining a priority of a logical channel based on an initial priority of the logical channel and/or a priority of a packet data unit set belonging to the logical channel.

In an embodiment, the initial priority of the logical channel includes:
an initial priority of a logical channel configured by a network device; or,
an initial priority of a logical channel determined based on preconfiguration information or system information transmitted from a network device.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
where N is a positive integer and is less than or equal to a quantity of packet data unit sets in the buffer, and k is a positive integer.

In an embodiment, determining the priority of the logical channel based on the priority of the packet data unit set belonging to the logical channel includes any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

In an embodiment, the processor is used for reading the computer program in the memory and perform the following operations:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

In an embodiment, determining the priority of the logical channel based on the initial priority of the logical channel and the priority of the packet data unit set belonging to the logical channel includes any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

In an embodiment, the processor is used for reading the computer program in the memory and perform the following operations:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

In an embodiment, the operations further include:
transmitting assistance information to a network device, where the assistance information is used to assist in determining the initial priority of the logical channel.

In an embodiment, the assistance information comprises at least one of the following:
it is supported, by the terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel;
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the processor is used for reading the computer program in the memory and perform the following operations:
determining, based on configuration information from a network device, a way for determining the priority of the logical channel; or
determining a way for determining the priority of the logical channel.

In an embodiment, determining the way for determining the priority of the logical channel includes:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

In an embodiment, the operations further include:
performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

In an embodiment, the transmission conflict includes:
a transmission conflict between data transmission corresponding to an uplink and data transmission corresponding to a sidelink; or
a transmission conflict between different configured grants corresponding to an uplink; or
a transmission conflict between different configured grants corresponding to a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

In an embodiment, the configuration information is configured based on a Uu interface, or a sidelink, or a Uu interface logical channel, or a sidelink logical channel.

An embodiment of the present application further provides a network device, including a memory, a transceiver and a processor;
the memory is used for storing a computer program, the transceiver is used for receiving and transmitting data under control of the processor and the processor is used for reading the computer program in the memory and performing the following operations:
transmitting configuration information to a terminal, where the configuration information is used to configure a method for determining priority of logical channel performed by the terminal, where the method comprises:
determining the priority of the logical channel based on an initial priority of a logical channel and/or a priority of a packet data unit set belonging to the logical channel.

In an embodiment, the configuration information includes a way for determining the priority of the logical channel based on the priority of the packet data unit set belonging to the logical channel.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
where N is a positive integer and is less than or equal to a quantity of packet data unit sets in the buffer, and k is a positive integer.

In an embodiment, the configuration information includes a way for determining the priority of the logical channel based on the initial priority of the logical channel and the priority of the packet data unit set belonging to the logical channel.

In an embodiment, the way for determining the priority of the logical channel based on the initial priority of the logical channel and the priority of the packet data unit set belonging to the logical channel includes any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, the processor is used for reading the computer program in the memory and perform the following operations:
configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
transmitting one or more of the initial priority of the logical channel, a weighted coefficient corresponding to the initial priority of the logical channel in the weighted average value, or a weighted coefficient corresponding to the priority of packet data unit set belonging to the logical channel in the weighted average value to the terminal.

In an embodiment, the processor is used for reading the computer program in the memory and perform the following operations:
receiving assistance information transmitted from the terminal, where the assistance information is used to assist in determining the initial priority of the logical channel.

In an embodiment, the assistance information comprises at least one of the following:
it is supported, by the terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information is configured based on a Uu interface, or a sidelink, or a Uu interface logical channel, or a sidelink logical channel.

An embodiment of the present application further provides an apparatus for determining priority of logical channel, including:
a determining unit, used for determining a priority of a logical channel based on an initial priority of the logical channel and/or a priority of a packet data unit set belonging to the logical channel.

In an embodiment, the initial priority of the logical channel includes:
an initial priority of a logical channel configured by a network device; or,
an initial priority of a logical channel determined based on preconfiguration information or system information transmitted from a network device.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
where N is a positive integer and is less than or equal to a quantity of packet data unit sets in the buffer, and k is a positive integer.

In an embodiment, determining the priority of the logical channel based on the priority of the packet data unit set belonging to the logical channel includes any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to a quantity of packet data unit sets in the buffer, and k is a positive integer.

In an embodiment, the apparatus further includes a second determining unit, used for:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

In an embodiment, determining the priority of the logical channel based on the initial priority of the logical channel and the priority of the packet data unit set belonging to the logical channel includes any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

In an embodiment, the apparatus further includes a third determining unit, used for:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

In an embodiment, the apparatus further includes:
a transmitting unit, used for transmitting assistance information to a network device, where the assistance information is used to assist in determining the initial priority of the logical channel.

In an embodiment, the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel;
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the apparatus further includes a fourth determining unit, used for:
determining, based on configuration information from a network device, a device for determining the priority of the logical channel; or
determining a device for determining the priority of the logical channel.

In an embodiment, the first determining unit is used for:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

In an embodiment, the apparatus further includes:
a performing unit, used for performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

In an embodiment, the transmission conflict includes:
a transmission conflict between data transmission corresponding to an uplink and data transmission corresponding to a sidelink; or
a transmission conflict between different configured grants corresponding to an uplink or a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

In an embodiment, the configuration information is configured based on a Uu interface, or a sidelink, or a Uu interface logical channel, or a sidelink logical channel.

An embodiment of the present application further provides an apparatus for determining priority of logical channel, including:
a first transmitting unit, used for transmitting configuration information to a terminal, where the configuration information is used to configure a method for determining priority of logical channel performed by the terminal, where the method comprises:
determining the priority of the logical channel based on an initial priority of a logical channel and/or a priority of a packet data unit set belonging to the logical channel.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information includes a way for determining the priority of the logical channel based on the priority of the packet data unit set belonging to the logical channel.

In an embodiment, the way for determining the priority of the logical channel based on the priority of the packet data unit set belonging to the logical channel includes any of the following:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

In an embodiment, the configuration information includes a way for determining the priority of the logical channel based on the initial priority of the logical channel and the priority of the packet data unit set belonging to the logical channel.

In an embodiment, the way for determining the priority of the logical channel based on the initial priority of the logical channel and the priority of the packet data unit set belonging to the logical channel includes any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, the apparatus further includes:
a configuring unit, used for configuring, based on a Uu interface, or a sidelink, or a Uu interface logical channel, or a sidelink logical channel, one or more of the initial priority of the logical channel, the weighted coefficient corresponding to the initial priority of the logical channel in the weighted average value, or the weighted coefficient corresponding to the priority of packet data unit set belonging to the logical channel in the weighted average value; and
a second transmitting unit, used for transmitting one or more of the initial priority of the logical channel, a weighted coefficient corresponding to the initial priority of the logical channel in the weighted average value, or a weighted coefficient corresponding to the priority of packet data unit set belonging to the logical channel in the weighted average value to the terminal.

In an embodiment, the apparatus further includes:
a receiving unit, used for receiving assistance information transmitted from the terminal, where the assistance information is used to assist in determining the initial priority of the logical channel.

In an embodiment, the assistance information comprises at least one of the following:
it is supported, by the terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information is configured based on a Uu interface, or a sidelink, or a Uu interface logical channel, or a sidelink logical channel.

An embodiment of the present application further provides a processor-readable storage medium, where the processor-readable storage medium stores a computer program, and the computer program causes a processor to perform the methods for determining the priority of the logical channel described above.

An embodiment of the present application further provides a computer-readable storage medium, where the computer-readable storage medium stores a computer program and the computer program causes a computer to perform the methods for determining the priority of the logical channel described above.

An embodiment of the present application further provides a communication device, where the communication device stores a computer program and the computer program causes the communication device to perform the methods for determining the priority of the logical channel described above.

An embodiment of the present application further provides a chip product, where the chip product stores a computer program and the computer program causes the chip product to perform the methods for determining the priority of the logical channel described above.

In the methods and apparatuses for determining a priority of a logical channel, and the storage medium provided by embodiments of the present application, the terminal determines the priority of the logical channel based on an initial priority of a logical channel and/or a priority of a packet data unit set belonging to the logical channel, which clarifies a solution of how to determine the priority of a logical channel when a PDU set exists in the logical channel, and improves the service experience.

### BRIEF DESCRIPTION OF THE DRAWINGS

To illustrate solutions in the embodiments of the present application or the related art more clearly, the drawings used in the descriptions of the embodiments or the prior art will be briefly described below. The drawings in the following description are some embodiments of the present application, and other drawings may be obtained based on these drawings without any creative work for those skilled in the related art.
FIG. 1 is a schematic structural diagram of a user plane air interface protocol layer in 5G according to the related art;
FIG. 2 is a schematic diagram of a transmission model for extended reality (XR) data according to the related art;
FIG. 3 is a first schematic flowchart of a method for determining priority of logical channel according to an embodiment of the present application;
FIG. 4 is a second schematic flowchart of a method for determining priority of logical channel according to an embodiment of the present application;
FIG. 5 is a schematic structural diagram of a terminal according to an embodiment of the present application;
FIG. 6 is a schematic structural diagram of a network device according to an embodiment of the present application.
FIG. 7 is a first schematic flowchart of an apparatus for determining priority of logical channel according to an embodiment of the present application; and
FIG. 8 is a second schematic flowchart of an apparatus for determining priority of logical channel according to an embodiment of the present application.

### DETAILED DESCRIPTION

To describe solutions in the embodiments of the present application well, relevant knowledge will be introduced below.

### (1) Basic procedures of traditional 5G air interface data processing

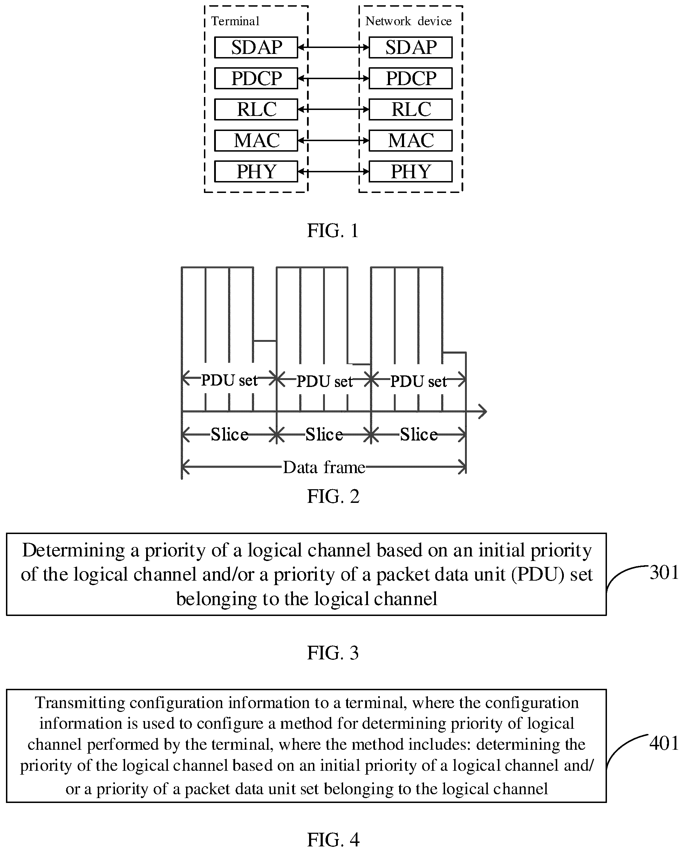

FIG. 1 is a schematic structural diagram of a user plane air interface protocol layer in 5G according to a related art. As shown in FIG. 1, the air interface user plane protocol layer in 5G includes a service data adaptation protocol (SDAP) layer, a packet data convergence protocol (PDCP) layer, a radio link control (RLC) layer, a media access control (MAC) layer and a physical layer.

After a quality of service (QoS) flow reaches the SDAP layer, the SDAP layer will perform a mapping of the QoS flow to a data radio bearer (DRB), and the SDAP protocol data unit (PDU) is formed after mapping. SDAP PDU is a PDCP service data unit (SDU). The PDCP layer performs header compression and encryption on the PDCP PDU and then transmits the header-compressed and encrypted PDCP PDU to the RLC layer. The RLC layer then encapsulates the RLC PDU based on the MAC layer scheduling information and transmits encapsulated RLC PDU to the MAC layer. The MAC layer encapsulates the received RLC PDU into a MAC PDU and then transmits encapsulated RLC PDU to the physical layer for transmission.

A principle of performing, by the SDAP layer, QoS flow to DRB mapping is as follows. Since the QoS attributes of data packets in a QoS Flow are basically the same, one QoS Flow may only be mapped to one DRB.

The transmission of DRB is based on MAC scheduling. In a traditional scheduling way, uplink scheduling resources allocated by a network device to a terminal are for one user. To ensure fairness between different services in uplink transmissions from terminals and avoid the inability to schedule some services, a logical channel prioritization (LCP) mechanism based on a priority of a logical channel and prioritized bit rate (PBR) is currently used.

The LCP mechanism based on logical channel priority and PBR is as follows.

In case that a terminal obtains an uplink resource grant (UL grant), a first round of resource allocation is performed for each logical channel having a requirement for data transmission based on the PBR in descending order of priorities of the logical channels. If the first round of resource allocation is completed and there are remaining resources, the remained resources are allocated to each logical channel in the descending order of priorities of logical channels having a requirement for data transmission.

### (2) Extended reality (XR) service

XR services may be divided into three representative forms: augmented reality (AR), mixed reality (MR) and virtual reality (VR).

FIG. 2 is a schematic diagram of a transmission model for XR data according to a related art. As shown in FIG. 2, the XR service is modeled based on the data frame, and the same data frame may be divided into multiple packet data unit (PDU) sets. The definition of PDU set is as follows: one or more PDUs corresponding to the same unit of information constitute a PDU set.

In traditional communication systems, all data in a logical channel have basically the same priorities, and a priority of the logical channel is the same as a priority of the data in the logical channel. However, for XR services, there may be PDU sets in a logical channel. Scheduling a transmission of packet data completely based on an initial priority of the logical channel fails to guarantee that a PDU set with a higher priority may be transmitted in time, which affects service experience. Therefore, it is necessary to consider how to determine the priority of the logical channel in case that one or more PDU sets exist in the logical channel. In response to the above-mentioned problems in the related art, embodiments of the present application provide the methods and apparatuses for determining a priority of a logical channel, and the storage medium. The priority of the logical channel is determined based on an initial priority of a logical channel and/or a priority of a packet data unit set belonging to the logical channel, which clarifies a solution of how to determine the priority of a logical channel when a PDU set exists in the logical channel, and improves the service experience.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal device may be called as user equipment (UE). A wireless terminal may communicate with one or more core networks (CN) via a radio access network (RAN), and the wireless terminal may be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device involved in the embodiments of the present application may be a base station, and the base station may include a plurality of cells providing services for the terminal. Depending on the specific application, the network side device may also be called an access point, or may be a device in the access network that communicates with wireless terminal through one or more sectors on the air interface, or other names. Network device can be used to exchange received air frames with Internet Protocol (IP) packets, and act as a router between radio terminal and the rest of the access network, and the rest of the access network can include an Internet protocol (IP) communication network. The network side devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network side device may include a centralized unit (CU) node and a distributed unit (DU) node, and the centralized unit and the distributed unit may also be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

FIG. 3 is a first schematic flowchart of a method for determining priority of logical channel according to an embodiment of the present application. As shown in FIG. 3, the method is performed by a terminal. The method includes at least the following step:
step 301: determining a priority of a logical channel based on an initial priority of the logical channel and/or a priority of a packet data unit (PDU) set belonging to the logical channel.

In an embodiment, in case that a PDU set exists in a logical channel, the method for determining the priority of the terminal logical channel may be divided into the following three ways.

Way 1: the priority of the logical channel is determined based on the initial priority of the logical channel.

Way 2: the priority of the logical channel is determined based on the priority of the PDU set belonging to the logical channel.

Way 3: the priority of the logical channel is determined based on the initial priority of the logical channel and the priority of the PDU set belonging to the logical channel.

In the method for determining priority of logical channel provided by embodiments of the present application, the terminal determines the priority of the logical channel based on an initial priority of a logical channel and/or a priority of a packet data unit set belonging to the logical channel, which clarifies a solution of how to determine the priority of a logical channel when a PDU set exists in the logical channel, and improves the service experience.

In an embodiment, the initial priority of the logical channel includes:
an initial priority of a logical channel configured by a network device; or,
an initial priority of a logical channel determined based on preconfiguration information or system information transmitted from a network device.

In an embodiment, the initial priority of the logical channel is configured or indicated by a network side. The network side directly configures the initial priority of the logical channel, or the terminal determines the initial priority of the logical channel based on the preconfiguration information transmitted from the network device or broadcast system information. For example, the system information is system information block (SIB) information. For example, a mapping relationship between the initial priority of the logical channel and a QoS parameter of the logical channel may be carried in the preconfiguration information from the network device or the broadcast system information, and the terminal determines the initial priority of the logical channel based on the QoS parameter corresponding to the logical channel.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
where N is a positive integer and is less than or equal to a quantity of packet data unit sets in the buffer, and k is a positive integer.

In an embodiment, the priority of the packet data unit set belonging to the logical channel includes any of the following.
(1) A priority of a first PDU set in a buffer corresponding to the logical channel. The buffer mentioned in the embodiments of the present application may be a PDCP PDU queue, and/or, an RLC PDU queue, and/or, a MAC subPDU queue (for preprocessing).
(2) A highest priority among priorities of first N PDU sets in a buffer corresponding to the logical channel.
(3) A weighted average value of priorities of first N PDU sets in a buffer corresponding to the logical channel.
(4) A highest priority among priorities of at least k PDU sets among the first N PDU sets in the buffer corresponding to the logical channel. For example, N is 5, and priorities corresponding to the 5 PDU sets are {2, 4, 4, 4, 3} respectively. In case that k is 3, then only priority "4" is three, and the highest priority is 4. In case that k is 1, then there is one priority "2" and one priority "3". 3 is greater than 2, thus, the highest priority is 3. The value of k is set as required. In possible implementation, the value of k may be set to a default value, or, in some cases, even if the value of k has been determined, the priority of the PDU set belonging to the logical channel in this case may be directly specified without following the above rules.

For another example, N is 5, and priorities corresponding to the 5 PDU sets are {2, 1, 1, 2, 3} respectively. In case that k is 2, then there are two priorities "2" and two priorities "1", and the highest priority is 2. In case that k is 1, there is only one priority "3", and the highest priority is 3. The value of k is set as required. In a possible implementation, the value of k may be set to a default value, or, in some cases, even if the value of k has been determined, the priority of the PDU set belonging to the logical channel in this case may be directly specified without following the above rules.

N is a positive integer, N is less than or equal to the quantity of PDU sets in the buffer, and k is a positive integer. Furthermore, k is less than or equal to N.

In an embodiment, determining the priority of the logical channel based on the priority of the packet data unit set belonging to the logical channel includes any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to a quantity of packet data unit sets in the buffer, and k is a positive integer. Furthermore, k is less than or equal to N.

In an embodiment, for way 2: determining the priority of the logical channel based on the priority of the PDU set belonging to the logical channel may include any of the following.
(1) The priority of the logical channel is determined based on the priority of the first PDU set in the buffer corresponding to the logical channel. The priority of the first PDU set in the buffer corresponding to the logical channel is determined to be the priority of the logical channel. The buffer mentioned in the embodiment of the present application may be a PDCP PDU queue, and/or, an RLC PDU queue, and/or, a MAC subPDU queue (for preprocessing).
(2) The priority of the logical channel is determined based on the highest priority among the priorities of first N PDU sets in the buffer corresponding to the logical channel. The highest priority among the priorities of first N PDU sets in the buffer corresponding to the logical channel is determined to be the priority of the logical channel.
(3) The priority of the logical channel is determined based on the weighted average value of the priorities of first N PDU sets in the buffer corresponding to the logical channel. The weighted average value of the priorities of first N PDU sets in the buffer corresponding to the logical channel is determined to be the priority of the logical channel. The weighting coefficient may be pre-configured or indicated by the network device or agreed by a protocol.
(4) The priority of the logical channel is determined based on the highest priority among priorities of at least k PDU sets among first N PDU sets in a buffer corresponding to the logical channel. The highest priority among priorities of at least k PDU sets among first N PDU sets in a buffer corresponding to the logical channel is determined to be the priority of the logical channel. N is a positive integer, N is less than or equal to the quantity of PDU sets in the buffer, and k is a positive integer. Furthermore, k is less than or equal to N.

N being equal to the quantity of PDU sets in the buffer indicates that all PDU sets in the current buffer are considered, and N being less than the quantity of PDU sets in the buffer indicates that only some PDU sets in the current buffer are considered.

At different times, a value of a priority of each PDU set in the buffer corresponding to the logical channel may change. The priority of the logical channel at different times may be determined based on the PDU set in the buffer corresponding to the logical channel at the current time.

In an embodiment, the method further include:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

In an embodiment, for way 2: the priority of the logical channel is determined based on the priority of the PDU set belonging to the logical channel. How to determine the priority of the logical channel , or the way for determining the priority of the logical channel may be determined by the configuration information from the network device, or may be determined by the terminal itself, and the specific method depends on implementation of the terminal.

For example, the terminal receives configuration information transmitted from the network device, and the configuration information indicates that the terminal determines the priority of the logical channel by way 2, and further indicates that the priority of the logical channel is determined based on the priority of the first PDU set in the buffer corresponding to the logical channel, or directly indicates in the configuration information that the priority of the logical channel is determined based on the priority of the first PDU set in the buffer corresponding to the logical channel.

For example, the configuration information indicates that the terminal determines the priority of the logical channel by way 2, and further indicates in the configuration information that the priority of the logical channel is determined based on the highest priority among the priorities of the first N packet data unit sets in the buffer corresponding to the logical channel. Or, the configuration information directly indicates that the priority of the logical channel is determined based on the highest priority among the priorities of first N packet data unit sets in the buffer corresponding to the logical channel.

For example, the configuration information indicates that the terminal determines the priority of the logical channel by way 2, and further indicates that the priority of the logical channel is determined based on the weighted average value of the priorities of the first N packet data unit sets in the buffer corresponding to the logical channel. Or, the configuration information directly indicates that the priority of the logical channel is determined based on the weighted average value of the priorities of first N packet data unit sets in the buffer corresponding to the logical channel.

For example, the configuration information indicates that the terminal determines the priority of the logical channel by way 2, and further indicates that the priority of the logical channel is determined based on the highest priority among the priorities of at least k packet data unit sets among first N packet data unit sets in the buffer corresponding to the logical channel. Or, the configuration information directly indicates that the priority of the logical channel is determined based on the highest priority among the priorities of at least k packet data unit sets among first N packet data unit sets in the buffer corresponding to the logical channel. N is a positive integer and is less than or equal to a quantity of packet data unit sets in the buffer, and k is a positive integer. Furthermore, k is less than or equal to N.

In an embodiment, the configuration information is configured based on a Uu interface, or a sidelink, or a Uu interface logical channel, or a sidelink logical channel.

For example, the terminal determines by itself to determine the priority of the logical channel by way 2, and further determines that the priority of the logical channel is determined based on the priority of the first PDU set in the buffer corresponding to the logical channel, or directly determines that the priority of the logical channel is determined based on the priority of the first PDU set in the buffer corresponding to the logical channel.

For example, the terminal determines by itself to determine the priority of the logical channel by way 2, and further determines that the priority of the logical channel is determined based on the highest priority among the priorities of the first N packet data unit sets in the buffer corresponding to the logical channel. Or, the terminal directly determines that the priority of the logical channel is determined based on the highest priority among the priorities of first N packet data unit sets in the buffer corresponding to the logical channel.

For example, the terminal determines by itself the priority of the logical channel by way 2, and further determines that the priority of the logical channel is determined based on the weighted average value of the priorities of the first N packet data unit sets in the buffer corresponding to the logical channel. Or, the terminal directly determines that the priority of the logical channel is determined based on the weighted average value of the priorities of first N packet data unit sets in the buffer corresponding to the logical channel.

For example, the terminal determines by itself to determine the priority of the logical channel by way 2, and further determines that the priority of the logical channel is determined based on the highest priority among the priorities of at least k packet data unit sets among first N packet data unit sets in the buffer corresponding to the logical channel. Or, the terminal directly determines that the priority of the logical channel is determined based on the highest priority among the priorities of at least k packet data unit sets among first N packet data unit sets in the buffer corresponding to the logical channel.

N is a positive integer and is less than or equal to a quantity of packet data unit sets in the buffer, and k is a positive integer. Furthermore, k is less than or equal to N.

In the method for determining the priority of the logical channel provided by embodiments of the present application, the priority of the logical channel is determined based on the priority of the PDU set belonging to the logical channel when a PDU set exists in the logical channel, which clarifies a solution of how to determine the priority of a logical channel when the PDU set exists in the logical channel, and improves the service experience.

In an embodiment, determining the priority of the logical channel based on the initial priority of the logical channel and the priority of the packet data unit set belonging to the logical channel includes any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, for way 3: determining the priority of the logical channel based on the initial priority of the logical channel and the priority of the packet data unit set belonging to the logical channel includes any of the following.
(1) A highest value among the initial priority of the logical channel and priorities of PDU sets belonging to the logical channel is determined to be the priority of the logical channel. The highest value among the initial priority of the logical channel and priorities of all PDU sets belonging to the logical channel is determined to be the priority of the logical channel.
(2) A weighted average value of the initial priority of the logical channel and priorities of PDU sets belonging to the logical channel is determined to be the priority of the logical channel. The initial priority of the logical channel and priorities of PDU sets belonging to the logical channel are weighted and the weighted average value is determined to be the priority of the logical channel.

In an embodiment, one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

In an embodiment, the initial priority of the logical channel may be configured by the network side. In way 3: in determining the priority of the logical channel based on the initial priority of the logical channel and the priority of the packet data unit set belonging to the logical channel, in case that the initial priority of the logical channel and priorities of PDU sets belonging to the logical channel are weighted, the weighted coefficient corresponding to the initial priority of the logical channel and/or the weighted coefficients corresponding to the priorities of the PDU sets belonging to the logical channel may be configured by the network side.

A way for configuring by the network side may include configuring the configuration information based on a Uu interface, or a sidelink, or a Uu interface logical channel, or a sidelink logical channel.

In an embodiment, the method further include:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

In an embodiment, for way 3: the priority of the logical channel is determined based on the initial priority of the logical channel and the priority of the PDU set belonging to the logical channel. How to determine the priority of the logical channel , or the way for determining the priority of the logical channel may be determined by the configuration information from the network device, or may be determined by the terminal itself, and the specific method depends on implementation of the terminal.

For example, the terminal receives configuration information transmitted from the network device, and the configuration information indicates that the terminal determines the priority of the logical channel by way 3, and further indicates that a weighted average value of the initial priority of the logical channel and the priority of the PDU set belonging to the logical channel is determined to be the priority of the logical channel, or directly indicates in the configuration information that a weighted average value of the initial priority of the logical channel and the priority of the PDU set belonging to the logical channel is determined to be the priority of the logical channel.

For example, the terminal receives configuration information transmitted from the network device, and the configuration information indicates that the terminal determines the priority of the logical channel by way 3, and further indicates that a highest value among the initial priority of the logical channel and the priority of the PDU set belonging to the logical channel is determined to be the priority of the logical channel, or directly indicates in the configuration information that a highest value among the initial priority of the logical channel and the priority of the PDU set belonging to the logical channel is determined to be the priority of the logical channel.

In an embodiment, the configuration information is configured based on a Uu interface, or a sidelink, or a Uu interface logical channel, or a sidelink logical channel.

For example, the terminal determines by itself the priority of the logical channel by way 3, and further determines a weighted average value of the initial priority of the logical channel and the priority of the PDU set belonging to the logical channel to be the priority of the logical channel, or directly determines a weighted average value of the initial priority of the logical channel and the priority of the PDU set belonging to the logical channel to be the priority of the logical channel.

For example, the terminal determines by itself the priority of the logical channel by way 3, and further determines a highest value among the initial priority of the logical channel and the priority of the PDU set belonging to the logical channel to be the priority of the logical channel, or directly determines a highest value among the initial priority of the logical channel and the priority of the PDU set belonging to the logical channel to be the priority of the logical channel.

In an embodiment, the method further include:
transmitting assistance information to a network device, where the assistance information is used to assist in determining the initial priority of the logical channel.

In an embodiment, the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer. Furthermore, k is less than or equal to N.

In an embodiment, the assistance information transmitted from the terminal to the network device may include at least one of the following.
(1) The terminal supports determining the priority of the logical channel based on a priority of a packet data unit set belonging to the logical channel.
(2) A candidate priority set of each packet data unit set belonging to the logical channel. At different times, the priority of each PDU set in the buffer corresponding to the logical channel may change, but all possible priority values of each PDU set belonging to the logical channel belong to a candidate priority set.
(3) A highest priority in a candidate priority set of each packet data unit set belonging to the logical channel.
(4) a priority of a first PDU set in a buffer corresponding to the logical channel.
(5) A highest priority among priorities of first N PDU sets in a buffer corresponding to the logical channel.
(6) A weighted average value of priorities of first N PDU sets in a buffer corresponding to the logical channel.
(7) A highest priority among priorities of at least k PDU sets among the first N PDU sets in the buffer corresponding to the logical channel.

N is a positive integer and is less than or equal to a quantity of packet data unit sets in the buffer, and k is a positive integer. Furthermore, k is less than or equal to N. N being equal to the quantity of PDU sets in the buffer indicates that all PDU sets in the current buffer are considered, and N being less than the quantity of PDU sets in the buffer indicates that only some PDU sets in the current buffer are considered.

In the method for determining the priority of the logical channel provided by embodiments of the present application, the priority of the logical channel is determined based on the priority of the PDU set belonging to the logical channel when a PDU set exists in the logical channel, which clarifies a solution of how to determine the priority of a logical channel when the PDU set exists in the logical channel, and improves the service experience.

In an embodiment, the method further include:
determining, based on configuration information from a network device, a way for determining the priority of the logical channel; or
determining a way for determining the priority of the logical channel.

In an embodiment, the ways for determining the priority of the logical channel includes: way 1: determining the priority of the logical channel based on the initial priority of the logical channel, way 2: determining the priority of the logical channel based on the priority of the PDU set belonging to the logical channel, and way 3: determining the priority of the logical channel based on the initial priority of the logical channel and the priority of the PDU set belonging to the logical channel.

The terminal may determine to use one of the three ways based on the configuration information from the network device, or choose to use one of the three ways by itself.

In an embodiment, the configuration information is configured based on a Uu interface, or a sidelink, or a Uu interface logical channel, or a sidelink logical channel.

In an embodiment, determining the way for determining the priority of the logical channel includes:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

In an embodiment, the following principles may be followed to select way 1, way 2 or way 3.
(1) The differences between initial priorities of multiple logical channels are less than a first threshold, or in other words, all the initial priorities of multiple logical channels are within a first interval, and an interval size of the first interval is less than the first threshold, it indicates that the initial priority of the logical channel is less important for determining the priority of the logical channel, and the priority of the logical channel may be determined based on the priority of the PDU set belonging to the logical channel.
(2) Differences between initial priorities of multiple logical channels are higher than a second threshold, it indicates that the initial priority of the logical channel is more important for determining the priority of the logical channel, and the priority of the logical channel may be determined based on the initial priority of the logical channel and the priority of the PDU set belonging to the logical channel.
(3) Differences between priorities of multiple packet data unit sets belonging to the logical channel are less than a third threshold, or in other words, all the priorities of multiple PDU sets belonging to the logical channel are within the second interval, and an interval size of the second interval is less than the third threshold, it indicates that the differences in priorities of multiple PDU sets in the logical channel is less important for determining the priority of the logical channel, and the priority of the logical channel may be determined directly based on the initial priority of the logical channel.
(4) Differences between priorities of multiple packet data unit sets belonging to the logical channel are higher than a fourth threshold, it indicates that the priority of each PDU set in the logical channel is less important for determining the priority of the logical channel, and the priority of the logical channel is determined based on the initial priority of the logical channel.

The first threshold, the second threshold, the third threshold, the fourth threshold, the first interval, and the second interval involved above may be configured or indicated by the network device.

In the method for determining the priority of the logical channel provided by embodiments of the present application, the principle of how to select way 1, way 2 or way 3 to determine the priority of the logical channel is clarified, which clarifies a solution of how to determine the priority of a logical channel when the PDU set exists in the logical channel, and improves the service experience.

In an embodiment, the method further include:
performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

In an embodiment, after the priority of the logical channel is determined, one or more of the following procedures are performed based on the priority of the logical channel:
(1) the uplink LCP procedure;
(2) the sidelink LCP procedure;
(3) the resource selection procedure in sidelink mode 2; or
(4) the resolution procedure of the transmission conflict.

In an embodiment, the transmission conflict includes:
a transmission conflict between data transmission corresponding to an uplink and data transmission corresponding to a sidelink; or
a transmission conflict between different configured grants corresponding to an uplink or a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

In an embodiment, the transmission conflict includes:
(1) a transmission conflict between data transmission corresponding to UL and data transmission corresponding to SL;
(2) a transmission conflict between different configured grants corresponding to UL or SL; The configured grant (CG) includes two types: type1 and type2.
(3) a transmission conflict between a configured grant corresponding to UL and a dynamic scheduling grant;
   a transmission conflict between a configured grant corresponding to SL and a dynamic scheduling grant;
(5) a transmission conflict between data transmission corresponding to UL and a measurement interval; or
(6) a transmission conflict between data transmission corresponding to SL and a measurement interval.

In the method for determining priority of logical channel provided by embodiments of the present application, the terminal determines the priority of the logical channel based on an initial priority of a logical channel and/or a priority of a packet data unit set belonging to the logical channel, which clarifies a solution of how to determine the priority of a logical channel when a PDU set exists in the logical channel, and improves the service experience.

FIG. 4 is a second schematic flowchart of a method for determining priority of logical channel according to an embodiment of the present application. As shown in FIG. 4, the method is performed by a network device. The method includes at least the following steps:
step 401: transmitting configuration information to a terminal, where the configuration information is used to configure a method for determining priority of logical channel performed by the terminal, where the method includes:
determining the priority of the logical channel based on an initial priority of a logical channel and/or a priority of a packet data unit set belonging to the logical channel.

In an embodiment, the network device transmits configuration information to a terminal, and the method for determining the priority of the logical channel of the terminal is configured in the configuration information. The method may include the following three ways.

Way 1: the priority of the logical channel is determined based on the initial priority of the logical channel.

Way 2: the priority of the logical channel is determined based on the priority of the PDU set belonging to the logical channel.

Way 3: the priority of the logical channel is determined based on the initial priority of the logical channel and the priority of the PDU set belonging to the logical channel.

In an embodiment, the initial priority of the logical channel is configured or indicated by the network side. The network side directly configures the initial priority of the logical channel for the terminal, or the network device transmits preconfiguration information to the terminal or broadcast system information and the terminal determines the initial priority of the logical channel. For example, the system information is system information block (SIB) information. For example, a mapping relationship between the initial priority of the logical channel and a QoS parameter of the logical channel may be carried in the preconfiguration information from the network device or the broadcast system information, and the terminal determines the initial priority of the logical channel based on the QoS parameter corresponding to the logical channel.

In the method for determining priority of logical channel provided by embodiments of the present application, the network device transmits configuration information to the terminal and the terminal determines the terminal determines the priority of the logical channel based on an initial priority of a logical channel and/or a priority of a packet data unit set belonging to the logical channel, which clarifies a solution of how to determine the priority of a logical channel when a PDU set exists in the logical channel.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer. Furthermore, k is less than or equal to N.

In an embodiment, the priority of the packet data unit set belonging to the logical channel includes any of the following.
(1) a priority of a first PDU set in a buffer corresponding to the logical channel. The buffer mentioned in the embodiments of the present application may be a PDCP PDU queue, and/or, an RLC PDU queue, and/or, a MAC subPDU queue (for preprocessing).
(2) A highest priority among priorities of first N PDU sets in a buffer corresponding to the logical channel.
(3) A weighted average value of priorities of first N PDU sets in a buffer corresponding to the logical channel.
(4) A highest priority among priorities of at least k PDU sets among the first N PDU sets in the buffer corresponding to the logical channel.

N is a positive integer, N is less than or equal to the quantity of PDU sets in the buffer, and k is a positive integer. Furthermore, k is less than or equal to N.

In an embodiment, the configuration information includes a way for determining the priority of the logical channel based on the priority of the packet data unit set belonging to the logical channel.

In an embodiment, the network device may inform the terminal of way 2 through configuration information: a specific method of determining the priority of the logical channel based on the initial priority of the logical channel and the priority of the packet data unit set belonging to the logical channel.

In an embodiment, the way for determining the priority of the logical channel based on the priority of the packet data unit set belonging to the logical channel includes any of the following:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to a quantity of packet data unit sets in the buffer, and k is a positive integer. Furthermore, k is less than or equal to N.

In an embodiment, the network device may inform the terminal of way 2 through configuration information: a specific way of determining the priority of the logical channel based on the initial priority of the logical channel and the priority of the packet data unit set belonging to the logical channel.

Way 2 may include the following.
(1) The priority of the logical channel is determined based on the priority of the first PDU set in the buffer corresponding to the logical channel. The priority of the first PDU set in the buffer corresponding to the logical channel is determined to be the priority of the logical channel.
(2) The priority of the logical channel is determined based on the highest priority among the priorities of first N PDU sets in the buffer corresponding to the logical channel. The highest priority among the priorities of first N PDU sets in the buffer corresponding to the logical channel is determined to be the priority of the logical channel.
(3) The priority of the logical channel is determined based on the weighted average value of the priorities of first N PDU sets in the buffer corresponding to the logical channel. The weighted average value of the priorities of first N PDU sets in the buffer corresponding to the logical channel is determined to be the priority of the logical channel. The weighting coefficient may be pre-configured or indicated by the network device or agreed by a protocol.
(4) The priority of the logical channel is determined based on the highest priority among priorities of at least k PDU sets among first N PDU sets in a buffer corresponding to the logical channel. The highest priority among priorities of at least k PDU sets among first N PDU sets in a buffer corresponding to the logical channel is determined to be the priority of the logical channel.

N is a positive integer, N is less than or equal to the quantity of PDU sets in the buffer, and k is a positive integer. Furthermore, k is less than or equal to N. N being equal to the quantity of PDU sets in the buffer indicates that all PDU sets in the current buffer are considered, and N being less than the quantity of PDU sets in the buffer indicates that only some PDU sets in the current buffer are considered.

In an embodiment, the configuration information includes a way for determining the priority of the logical channel based on the initial priority of the logical channel and the priority of the packet data unit set belonging to the logical channel.

In an embodiment, the network device may inform the terminal of way 3 through configuration information: a specific way of determining the priority of the logical channel based on the initial priority of the logical channel and the priority of the packet data unit set belonging to the logical channel.

In an embodiment, the way for determining the priority of the logical channel based on the initial priority of the logical channel and the priority of the packet data unit set belonging to the logical channel includes any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, the network device may inform the terminal of way 3 through configuration information: a specific way of determining the priority of the logical channel based on the initial priority of the logical channel and the priority of the packet data unit set belonging to the logical channel.

Way 3 may include the following.
(1) A highest value among the initial priority of the logical channel and priorities of PDU sets belonging to the logical channel is determined to be the priority of the logical channel. The highest value among the initial priority of the logical channel and priorities of all PDU sets belonging to the logical channel is determined to be the priority of the logical channel.
(2) A weighted average value of the initial priority of the logical channel and priorities of PDU sets belonging to the logical channel is determined to be the priority of the logical channel. The initial priority of the logical channel and priorities of PDU sets belonging to the logical channel are weighted and the weighted average value is determined to be the priority of the logical channel.

A way for configuring by the network side may include configuring the configuration information based on a Uu interface, or a sidelink, or a Uu interface logical channel, or a sidelink logical channel.

In an embodiment, the method further include:
configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
transmitting one or more of the initial priority of the logical channel, a weighted coefficient corresponding to the initial priority of the logical channel in the weighted average value, or weighted coefficient corresponding to the priority of packet data unit set belonging to the logical channel in the weighted average value to the terminal

In an embodiment, the initial priority of the logical channel may be configured by the network side. In way 3: in determining the priority of the logical channel based on the initial priority of the logical channel and the priority of the packet data unit set belonging to the logical channel, in case that the initial priority of the logical channel and priorities of PDU sets belonging to the logical channel are weighted, the weighted coefficient corresponding to the initial priority of the logical channel and/or the weighted coefficient corresponding to the priorities of the PDU sets belonging to the logical channel may be configured by the network side.

The network device pre-configures one or more of the initial priority of the logical channel, the weighted coefficient corresponding to the initial priority of the logical channel, or the weighted coefficient corresponding to the priority of packet data unit set belonging to the logical channel and transmits it/them to the terminal.

A way for configuring by the network side may include configuring the configuration information based on a Uu interface, or a sidelink, or a Uu interface logical channel, or a sidelink logical channel.

In an embodiment, the method further include:
receiving assistance information transmitted from the terminal, where the assistance information is used to assist in determining the initial priority of the logical channel.

In an embodiment, for way 1: the priority of the logical channel is determined based on the initial priority of the logical channel, and for way 3: the priority of the logical channel is determined based on the initial priority of the logical channel and the priority of the PDU set belonging to the logical channel. The network device may receive the assistance information transmitted from the terminal and determine the initial priority of the logical channel based on the assistance information.

In an embodiment, the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
where N is a positive integer and is less than or equal to a quantity of packet data unit sets in the buffer, and k is a positive integer. Furthermore, k is less than or equal to N.

In an embodiment, the assistance information received by the network device from the terminal may include at least one of the following.
(1) The terminal supports determining the priority of the logical channel based on a priority of a packet data unit set belonging to the logical channel.
(2) A candidate priority set of each packet data unit set belonging to the logical channel. At different times, the priority of each PDU set in the buffer corresponding to the logical channel may change, but all possible priority values of each PDU set belonging to the logical channel belong to a candidate priority set.
(3) A highest priority in a candidate priority set of each packet data unit set belonging to the logical channel.
(4) A priority of a first PDU set in a buffer corresponding to the logical channel.
(5) A highest priority among priorities of first N PDU sets in a buffer corresponding to the logical channel.
(6) A weighted average value of priorities of first N PDU sets in a buffer corresponding to the logical channel.
(7) A highest priority among priorities of at least k PDU sets among the first N PDU sets in the buffer corresponding to the logical channel.

N is a positive integer, N is less than or equal to the quantity of PDU sets in the buffer, and k is a positive integer. Furthermore, k is less than or equal to N. N being equal to the quantity of PDU sets in the buffer indicates that all PDU sets in the current buffer are considered, and N being less than the quantity of PDU sets in the buffer indicates that only some PDU sets in the current buffer are considered.

In the method for determining priority of logical channel provided by embodiments of the present application, the network device transmits configuration information to the terminal and the terminal determines the terminal determines the priority of the logical channel based on an initial priority of a logical channel and/or a priority of a packet data unit set belonging to the logical channel, which clarifies a solution of how to determine the priority of a logical channel when a PDU set exists in the logical channel, and improves the service experience.

The solutions of the embodiments of the present application are further introduced below through several specific examples.

The terminal determines a way for determining the priority of the logical channel, which includes the following.

Way 1: the priority of the logical channel is determined based on the initial priority of the logical channel.

Way 2: the priority of the logical channel is determined based on the priority of the PDU set belonging to the logical channel.

Way 3: the priority of the logical channel is determined based on the initial priority of the logical channel and the priority of the PDU set belonging to the logical channel.

Example 1: the terminal determines the priority of the logical channel during the uplink LCP in way 2.

Step 1-1, the terminal receives the uplink resource grant transmitted from the network device.

Step 1-2, the terminal performs the LCP procedure. The LCP procedure is further divided into the following.

Step 1-2a, all logical channels currently having requirements for data transmission are sorted in descending order of priorities of logical channels and resources are sequentially allocated based on the PBR in the descending order of the priorities of logical channels.

Step 1-2a, if after the resource allocation is completed and there are remaining resources, the logical channels are continuously sorted in descending order of priorities of logical channels. Resources are allocated sequentially to each logical channel having a requirement for data transmission until the resources are depleted or resources are available for data in all the logical channels.

In the step 1-2a and step 1-2b, the terminal may determine the priority of the logical channel using way 2 based on the configuration information transmitted from the network device. Alternatively, the terminal may determine by itself the priority of the logical channel using way 2, for example, a PDU set exists in the logical channel.

The specific implementation of way 2 may include the following.
(1) The priority of the logical channel is determined based on the priority of the first PDU set in the buffer corresponding to the logical channel. The priority of the first PDU set in the buffer corresponding to the logical channel is determined to be the priority of the logical channel. The buffer mentioned in the embodiments of the present application may be a PDCP PDU queue, and/or, an RLC PDU queue, and/or, a MAC subPDU queue (for preprocessing).
(2) The priority of the logical channel is determined based on the highest priority among the priorities of first N PDU sets in the buffer corresponding to the logical channel. The highest priority among the priorities of first N PDU sets in the buffer corresponding to the logical channel is determined to be the priority of the logical channel.
(3) The priority of the logical channel is determined based on the weighted average value of the priorities of first N PDU sets in the buffer corresponding to the logical channel. The weighted average value of the priorities of first N PDU sets in the buffer corresponding to the logical channel is determined to be the priority of the logical channel. The weighting coefficient may be pre-configured or indicated by the network device or agreed by a protocol.
(4) The priority of the logical channel is determined based on the highest priority among priorities of at least k PDU sets among first N PDU sets in a buffer corresponding to the logical channel. The highest priority among priorities of at least k PDU sets among first N PDU sets in a buffer corresponding to the logical channel is determined to be the priority of the logical channel.

N is a positive integer, N is less than or equal to the quantity of PDU sets in the buffer, and k is a positive integer. Furthermore, k is less than or equal to N.

Example 2: the terminal determines the priority of the logical channel during the uplink LCP in way 3.

Step 2-1, the terminal receives the uplink resource grant transmitted from the network device.

Step 2-2, the terminal performs the LCP procedure. The LCP procedure is further divided into the following.

Step 2-2a, all logical channels currently having requirements for data transmission are sorted in descending order of priorities of logical channels and resources are sequentially allocated based on the PBR in the descending order of the priorities of logical channels.

Step 2-2b, if after the resource allocation is completed and there are remaining resources, the logical channels are continuously sorted in descending order of priorities of logical channels. Resources are allocated sequentially to each logical channel having a requirement for data transmission until the resources are depleted or resources are available for data in all the logical channels.

In the step 1-2a and step 1-2b, the terminal may determine the priority of the logical channel using way 2 based on the configuration information transmitted from the network device. Alternatively, the terminal may determine by itself the priority of the logical channel using way 2, for example, a PDU set exists in the logical channel.

The specific implementation of the way 3 may include the following.
(1) A highest value among the initial priority of the logical channel and priorities of PDU sets belonging to the logical channel is determined to be the priority of the logical channel. The highest value among the initial priority of the logical channel and priorities of all PDU sets belonging to the logical channel is determined to be the priority of the logical channel.
(2) A weighted average value of the initial priority of the logical channel and priorities of PDU sets belonging to the logical channel is determined to be the priority of the logical channel. The initial priority of the logical channel and priorities of PDU sets belonging to the logical channel are weighted and the weighted average value is determined to be the priority of the logical channel.

Example 3: the terminal performs sidelink target address selection and LCP procedure based on the priority of the logical channel.

Step 3-1: the terminal obtains a sidelink grant. For a sidelink resource allocation mode scheduled by a network, sidelink resources are allocated to the terminal by the network device; for a sidelink resource allocation mode selected by the terminal itself, the sidelink resources are selected by the terminal.

Step 3-2: the terminal performs target address selection.

In an embodiment, the terminal first determines a media access control - control element (MAC CE) with the highest priority from MAC CEs corresponding to all communication types (including unicast, groupcast and broadcast) of the sidelink, or determines a logical channel with the highest priority from logical channels based on the sidelink that meets the specified conditions, and takes a target address corresponding to the MAC CE or the logical channel with the highest priority as the sidelink target address.

The specified conditions that the logical channel needs to meet include the following.
(1) The logical channel has available sidelink communication data.
(2) A sidelink prioritized bit rate (SBj) is greater than 0. SBj is a quantity of tokens in a token bucket corresponding to the logical channel for the sidelink.
(3) In case that the sidelink grant is a CG Type 1, the logical channel needs to be configured with sl-configuredGrantType1Allowed, and a value of sl-configuredGrantTypelAllowed is set to true.
(4) In case that the logical channel is configured with sl-AllowedCG-List, it needs to contain an index of the SL CG corresponding to the current sidelink grant.
(5) In case that physical sidelink feedback channel (PSFCH) is not configured for a sidelink grant corresponding to sidelink control information (SCI), the sl-HARQ-FeedbackEnabled corresponding to the logical channel needs to be set to disabled.

In case that multiple logical channels meet the above specified conditions at the same time, selecting the target address corresponding to which logical channel as the sidelink communication target address depends on the terminal.

In an embodiment, the terminal may determine the priority of the logical channel using way 3 based on the configuration information transmitted from the network device. Alternatively, the terminal may determine by itself the priority of the logical channel using way 3, for example, a PDU set exists in the logical channel. The specific implementation of way 3 may refer to example 2.

Step 3-3, The terminal further select a logical channel based on sidelink communication target addresses selected in step 3-2.

In an embodiment, the terminal further selects a logical channel from the logical channels corresponding to the sidelink communication target addresses selected in step 3-2, and the selection conditions include the followings.
(1) The logical channel has available sidelink communication data.
(2) SBj is greater than 0.
(3) In case that the sidelink grant is a CG Type 1, the logical channel needs to be configured with sl-configuredGrantType1Allowed, and a value of sl-configuredGrantTypelAllowed is set to true.
(4) In case that the logical channel is configured with sl-AllowedCG-List, an index of the SL CG corresponding to the current sidelink grant needs to be included.
(5) If PSFCH is not configured for a sidelink grant corresponding to SCI, the sl-HARQ-FeedbackEnabled corresponding to the logical channel needs to be set to disabled. If PSFCH is configured for a sidelink grant corresponding to SCI, then further: if the sl-HARQ-FeedbackEnabled corresponding to the logical channel with the highest priority that meets (1)-(4) is enabled, the sl-HARQ-FeedbackEnabled corresponding to the selected logical channel needs to be enabled; if the sl-HARQ-FeedbackEnabled corresponding to the logical channel with the highest priority that meets(1)-(4) is disabled, the sl-HARQ-FeedbackEnabled corresponding to the selected logical channel needs to be disabled.

Step 3-4, resources are allocated for the logical channel selected in step 3-3, which includes the following.

Step 3-4a, for the logical channels selected in step 3-3 with SBj greater than 0, resources are allocated based on the PBR in descending order of the priorities of the logical channels. If the PBR corresponding to a logical channel is set to infinity, the MAC entity allocates resources for all data in the logical channel.

Step 3-4b, the SBj corresponding to each logical channel is updated based on step 3-4a.

Step 3-4c, if there are still remaining resources, resources are allocated sequentially in the priority order of all logical channels determined in step 3-4a until resources are allocated to all data of the logical channel or the resources are depleted. Logical channels with the same priority are handled fairly.

In step 3-4, the priority of the logical channel is determined using way 3. The specific implementation of way 3 may refer to example 2.

The priority of the logical channel in step 3-2 and step 3-4 may be determined using different ways.

Example 4: the terminal performs sidelink target address selection and LCP procedure based on the priority of the logical channel.

Step 4-1: the terminal obtains a sidelink grant. For a sidelink resource allocation mode scheduled by a network, sidelink resources are allocated to the terminal by the network device; for a sidelink resource allocation mode selected by the terminal itself, the sidelink resources are selected by the terminal.

Step 4-2: the terminal performs target address selection.

In an embodiment, the terminal first determines a media access control - control element (MAC CE) with the highest priority from MAC CEs the corresponding to all communication types (including unicast, groupcast and broadcast) of the sidelink, or determines a logical channel with the highest priority from logical channels based on the sidelink that meet the specified conditions, and takes a target address corresponding to the MAC CE or the logical channel with the highest priority as the sidelink target address.

The specified conditions that the logical channel needs to meet include the following.
(1) The logical channel has available sidelink communication data.
(2) SBj is greater than 0.
(3) In case that the sidelink grant is a CG Type 1, the logical channel needs to be configured with sl-configuredGrantType1Allowed, and a value of sl-configuredGrantTypelAllowed is set to true.
(4) In case that the logical channel is configured with sl-AllowedCG-List, an index of the SL CG corresponding to the current sidelink grant needs to be included.
(5) If PSFCH is not configured for a sidelink grant corresponding to SCI, the sl-HARQ-FeedbackEnabled corresponding to the logical channel needs to be set to disabled.

In case that multiple logical channels meet the above specified conditions at the same time, selecting the target address corresponding to which logical channel as the sidelink communication target address depends on the terminal.

In an embodiment, the terminal may determine the priority of the logical channel using way 2 based on the configuration information transmitted from the network device. Alternatively, the terminal may determine by itself the priority of the logical channel using way 2, for example, a PDU set exists in the logical channel. The specific implementation of way 2 may refer to example 1.

Step 4-3, The terminal further selects a logical channel based on sidelink communication target addresses selected in step 4-2.

In an embodiment, the terminal further selects a logical channel from the logical channels corresponding to the sidelink communication target addresses selected in step 4-2, and the selection conditions include the followings.
(1) The logical channel has available sidelink communication data.
(2) SBj is greater than 0.
(3) In case that the sidelink grant is a CG Type 1, the logical channel needs to be configured with sl-configuredGrantType1Allowed, and a value of sl-configuredGrantTypelAllowed is set to true.
(4) In case that the logical channel is configured with sl-AllowedCG-List, an index of the SL CG corresponding to the current sidelink grant needs to be included.
(5) If PSFCH is not configured for a sidelink grant corresponding to SCI, the sl-HARQ-FeedbackEnabled corresponding to the logical channel needs to be set to disabled. If PSFCH is configured for a sidelink grant corresponding to SCI, then further: if the sl-HARQ-FeedbackEnabled corresponding to the logical channel with the highest priority that meets (1)-(4)is enabled, the sl-HARQ-FeedbackEnabled corresponding to the selected logical channel needs to be enabled; if the sl-HARQ-FeedbackEnabled corresponding to the logical channel with the highest priority that meets (1)-(4) is disabled, the sl-HARQ-FeedbackEnabled corresponding to the selected logical channel needs to be disabled.

Step 4-4, resources are allocated for the logical channel selected in step 4-3, which includes the following.

Step 4-4a, for the logical channels selected in step 4-3 with SBj greater than 0, resources are allocated based on the PBR in descending order of the priorities of the logical channels. If the PBR corresponding to a logical channel is set to infinity, the MAC entity allocates resources for all data in the logical channel.

Step 4-4b, the SBj corresponding to each logical channel is updated based on step 4-4a.

Step 4-4c, if there are still remaining resources, resources are allocated sequentially in the priority order of all logical channels determined strictly in step 4-4a until resources are allocated to all data of the logical channel or the resources are depleted. Logical channels with the same priority are handled fairly.

In step 4-4, the priority of the logical channel is determined using way 2. The specific implementation of the way 2 may refer to example 1.

The priority of the logical channel in step 4-2 and step 4-4 may be determined using different ways.

Example 5: the network device configures the initial priority of the logical channel based on the priority of the PDU set.

Step 5-1, the terminal transmits assistance information to the network device, and the assistance information includes at least one of the following.
(1) The terminal supports determining the priority of the logical channel based on a priority of a packet data unit set belonging to the logical channel.
(2) A candidate priority set of each packet data unit set belonging to the logical channel. At different times, the priority of each PDU set in the buffer corresponding to the logical channel may change, but all possible priority values of each PDU set belonging to the logical channel belong to a candidate priority set.
(3) A highest priority in a candidate priority set of each packet data unit set belonging to the logical channel.
(4) A priority of a first PDU set in a buffer corresponding to the logical channel.
(5) A highest priority among priorities of first N PDU sets in a buffer corresponding to the logical channel.
(6) A weighted average value of priorities of first N PDU sets in a buffer corresponding to the logical channel.
(7) A highest priority among priorities of at least k PDU sets among the first N PDU sets in the buffer corresponding to the logical channel.

N is a positive integer, N is less than or equal to the quantity of PDU sets in the buffer, and k is a positive integer. Furthermore, k is less than or equal to N. N being equal to the quantity of PDU sets in the buffer indicates that all PDU sets in the current buffer are considered, and N being less than the quantity of PDU sets in the buffer indicates that only some PDU sets in the current buffer are considered.

Step 5-2: the network device configures the initial priority of the logical channel based on the assistance information.

In the method for determining priority of logical channel provided by embodiments of the present application, the terminal determines the priority of the logical channel based on an initial priority of a logical channel and/or a priority of a packet data unit set belonging to the logical channel, which clarifies a solution of how to determine the priority of a logical channel when a PDU set exists in the logical channel, and improves the service experience.

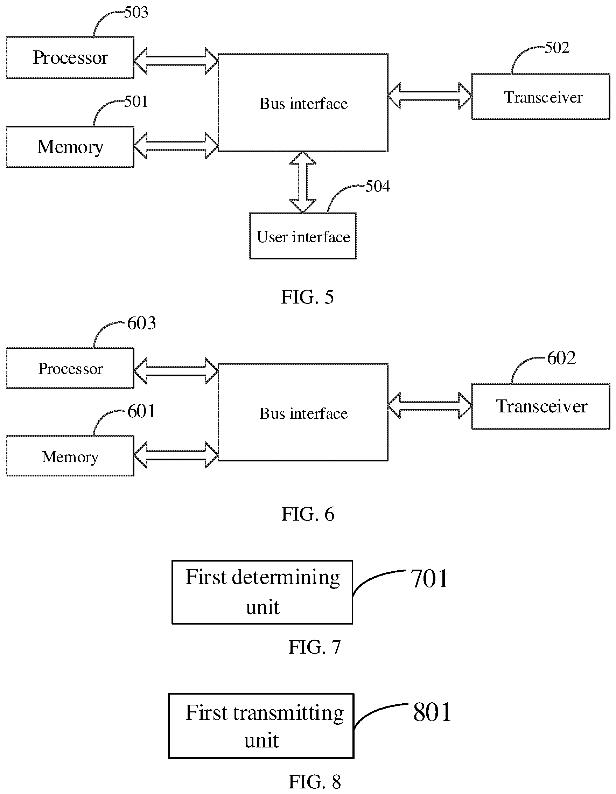

FIG. 5 is a schematic structural diagram of a terminal according to an embodiment of the present application. As shown in FIG. 5, the terminal includes a memory 501, a transceiver 502, and a processor 503, where
the memory 501 is used to store a computer program; the transceiver 502 is used to transmit and receive data under control of the processor 503.

In an embodiment, the transceiver 502 is used for receiving and transmitting data under control of the processor 503.

In FIG. 5, a bus architecture may include any quantity of interconnected buses and bridges, which are linked together through various circuits of one or more processors represented by processor 503 and one or more memories represented by the memory 501. The bus architecture may also link together various other circuits, such as peripherals, voltage regulators, and power management circuits, which are well known in the art, and therefore will not be further described in the present application. The bus interface provides an interface. The transceiver 502 may be multiple elements, i.e., including a transmitter and a receiver, units for providing communication with various other devices over transmission media including wireless channels, wired channels, fiber optic cables, and the like. For different user equipment, the user interface 504 may also be an interface capable of externally or internally connecting the required equipment, and the connected equipment includes, but not limited to, a keypad, a display, a speaker, a microphone, a joystick, and the like.

The processor 503 is responsible for managing the bus architecture and general processing, and the memory 501 may store data used by the processor 503 when performing operations.

The processor 503 may be a central processing unit (CPU), an application specific integrated circuit (ASIC), a field-programmable gate array (FPGA), or a complex programmable logic device (CPLD), the processor can also use a multi-core architecture.

The processor is configured to perform any of the methods of the embodiments of the present application based on the obtained executable instructions by invoking the computer program stored in the memory. The processor and memory may also be physically separated.

The processor 503 is used for reading the computer program in the memory 501 and perform the following operations:
determining a priority of a logical channel based on an initial priority of the logical channel and/or a priority of a packet data unit set belonging to the logical channel.

In an embodiment, the initial priority of the logical channel includes:
an initial priority of a logical channel configured by a network device; or,
an initial priority of a logical channel determined based on preconfiguration information or system information transmitted from a network device.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, determining the priority of the logical channel based on the priority of the packet data unit set belonging to the logical channel includes any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

In an embodiment, the processor 503 is used for reading the computer program in the memory 501 and perform the following operations:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

In an embodiment, determining the priority of the logical channel based on the initial priority of the logical channel and the priority of the packet data unit set belonging to the logical channel includes any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

In an embodiment, the processor 503 is used for reading the computer program in the memory 501 and performing the following operations:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

In an embodiment, the operations further include:
transmitting assistance information to a network device, where the assistance information is used to assist in determining the initial priority of the logical channel.

In an embodiment, the assistance information comprises at least one of the following:
it is supported, by the terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel;
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the processor 503 is used for reading the computer program in the memory 501 and performing the following operations:
determining, based on configuration information from a network device, a way for determining the priority of the logical channel; or
determining a way for determining the priority of the logical channel.

In an embodiment, determining the way for determining the priority of the logical channel includes:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

In an embodiment, the operations further include:
performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

In an embodiment, the transmission conflict includes:
a transmission conflict between data transmission corresponding to an uplink and data transmission corresponding to a sidelink; or
a transmission conflict between different configured grants corresponding to an uplink; or
a transmission conflict between different configured grants corresponding to a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

In an embodiment, the configuration information is configured based on a Uu interface, or a sidelink, or a Uu interface logical channel, or a sidelink logical channel.

It should be noted here that the above-mentioned terminal according to the embodiments of the present application can implement all the method steps implemented by the above-mentioned method embodiments, and can achieve the same effect. The same parts and beneficial effects as the same method embodiments will not be repeated here.

FIG. 6 is a schematic structural diagram of a network device according to an embodiment of the present application. As shown in FIG. 6, the terminal device includes a memory 601, a transceiver 602, and a processor 603, where
the memory 601 is used to store a computer program; the transceiver 602 is used to transmit and receive data under control of the processor 603.

In an embodiment, the transceiver 602 is used for receiving and transmitting data under control of the processor 603.

In FIG. 6, a bus architecture may include any quantity of interconnected buses and bridges, which are linked together through various circuits of one or more processors represented by processor 603 and one or more memories represented by the memory 601. The bus architecture may also link together various other circuits, such as peripherals, voltage regulators, and power management circuits, which are well known in the art, and therefore will not be further described in the present application. The bus interface provides an interface. The transceiver 602 may be multiple elements, i.e., including a transmitter and a receiver, units for providing communication with various other devices over transmission media including wireless channels, wired channels, fiber optic cables, and the like. The processor 603 is responsible for managing the bus architecture and general processing, and the memory 601 may store data used by the processor 603 when performing operations.

The processor 603 may be a central processing unit (CPU), an application specific integrated circuit (ASIC), a field-programmable gate array (FPGA), or a complex programmable logic device (CPLD), the processor can also use a multi-core architecture.

The processor 603 is used for reading the computer program in the memory 601 and perform the following operations:
transmitting configuration information to a terminal, where the configuration information is used to configure a method for determining priority of logical channel performed by the terminal, where the method comprises:
determining the priority of the logical channel based on an initial priority of a logical channel and/or a priority of a packet data unit set belonging to the logical channel.

In an embodiment, the configuration information includes a way for determining the priority of the logical channel based on the priority of the packet data unit set belonging to the logical channel.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information includes a way for determining the priority of the logical channel based on the initial priority of the logical channel and the priority of the packet data unit set belonging to the logical channel.

In an embodiment, the way for determining the priority of the logical channel based on the initial priority of the logical channel and the priority of the packet data unit set belonging to the logical channel includes any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, the processor 603 is used for reading the computer program in the memory 601 and perform the following operations:
configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
transmitting one or more of the initial priority of the logical channel, a weighted coefficient corresponding to the initial priority of the logical channel in the weighted average value, or weighted coefficient corresponding to the priority of packet data unit set belonging to the logical channel in the weighted average value to the terminal

In an embodiment, the processor 603 is used for reading the computer program in the memory 601 and performing the following operations:
receiving assistance information transmitted from the terminal, where the assistance information is used to assist in determining the initial priority of the logical channel.

In an embodiment, the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information is configured based on a Uu interface, or a sidelink, or a Uu interface logical channel, or a sidelink logical channel.

It should be noted here that the above-mentioned network device according to the embodiments of the present application may implement all the method steps implemented by the above-mentioned method embodiments performed by the network device, and may achieve the same effect. The same parts and beneficial effects as the same method embodiments is not repeated in the present application.

FIG. 7 is a first schematic structural diagram of an apparatus for determining priority of logical channel according to an embodiment of the present application. As shown in FIG. 7, the apparatus includes:
a determining unit 701, used for determining a priority of a logical channel based on an initial priority of the logical channel and/or a priority of a packet data unit set belonging to the logical channel.

In an embodiment, the initial priority of the logical channel includes:
an initial priority of a logical channel configured by a network device; or,
an initial priority of a logical channel determined based on preconfiguration information or system information transmitted from a network device.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the apparatus further includes a second determining unit, used for:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

In an embodiment, determining the priority of the logical channel based on the initial priority of the logical channel and the priority of the packet data unit set belonging to the logical channel includes:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

In an embodiment, the apparatus further includes a third determining unit, used for:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

In an embodiment, the apparatus further includes:
a transmitting unit, used for transmitting assistance information to a network device, where the assistance information is used to assist in determining the initial priority of the logical channel.

In an embodiment, the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the apparatus further includes a fourth determining unit, used for:
determining, based on configuration information from a network device, a way for determining the priority of the logical channel; or
determining a way for determining the priority of the logical channel.

In an embodiment, the first determining unit is used for:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

In an embodiment, the apparatus further includes:
a performing unit, used for performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

In an embodiment, the transmission conflict includes:
a transmission conflict between data transmission corresponding to an uplink and data transmission corresponding to a sidelink; or
a transmission conflict between different configured grants corresponding to an uplink or a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

In an embodiment, the configuration information is configured based on a Uu interface, or a sidelink, or a Uu interface logical channel, or a sidelink logical channel.

FIG. 8 is a second schematic structural diagram of an apparatus for determining priority of logical channel according to an embodiment of the present application. As shown in FIG. 8, the apparatus includes:
a first transmitting unit 801, used for transmitting configuration information to a terminal, where the configuration information is used to configure a method for determining priority of logical channel performed by the terminal, where the method comprises:
   determining the priority of the logical channel based on an initial priority of a logical channel and/or a priority of a packet data unit set belonging to the logical channel.

In an embodiment, the configuration information includes a way for determining the priority of the logical channel based on the priority of the packet data unit set belonging to the logical channel.

In an embodiment, the priority of the packet data unit set belonging to the logical channel includes:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information includes a way for determining the priority of the logical channel based on the initial priority of the logical channel and the priority of the packet data unit set belonging to the logical channel.

In an embodiment, the way for determining the priority of the logical channel based on the initial priority of the logical channel and the priority of the packet data unit set belonging to the logical channel includes any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

In an embodiment, the apparatus further includes:
a configuring unit, used for configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
a second transmitting unit, used for transmitting one or more of the initial priority of the logical channel, the weighted coefficient corresponding to the initial priority of the logical channel in the weighted average value, or the weighted coefficient corresponding to the priority of packet data unit set belonging to the logical channel in the weighted average value to the terminal.

In an embodiment, the apparatus further includes:
a receiving unit, used for receiving assistance information transmitted from the terminal, where the assistance information is used to assist in determining the initial priority of the logical channel.

In an embodiment, the assistance information comprises at least one of the following:
it is supported, by the terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

In an embodiment, the configuration information is configured based on a Uu interface, or a sidelink, or a Uu interface logical channel, or a sidelink logical channel.

The methods and the devices are based on the same disclosed concept, the implementation of the devices and the methods can be referred to each other d since the principles of the methods and the devices are similar, and the repetition will not be repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or a compact disk.

It should be noted here that the above-mentioned apparatus according to the embodiments of the present application can implement all the method steps implemented by the above-mentioned method embodiments, and may achieve the same effect. The same parts and beneficial effects as the same method embodiments will not be repeated here.

An embodiment of the present application further provides a processor-readable storage medium having stored thereon a computer program that cause a processor to perform methods for determining a priority of a logical channel, provided by embodiments described above, which, for example, includes:
determining a priority of a logical channel based on an initial priority of the logical channel and/or a priority of a packet data unit set belonging to the logical channel;
   or,
transmitting configuration information to a terminal, where the configuration information is used to configure a method for determining priority of logical channel performed by the terminal, where the method comprises: determining the priority of the logical channel based on an initial priority of a logical channel and/or a priority of a packet data unit set belonging to the logical channel.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for determining priority of logical channel, comprising:
determining a priority of a logical channel based on an initial priority of the logical channel and/or a priority of a packet data unit set belonging to the logical channel.

2. The method of claim 1, wherein the initial priority of the logical channel comprises:
an initial priority of a logical channel configured by a network device; or,
an initial priority of a logical channel determined based on preconfiguration information or system information transmitted from a network device.

3. The method of claim 1, wherein the priority of the packet data unit set belonging to the logical channel comprises:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

4. The method of claim 3, wherein determining the priority of the logical channel based on the priority of the packet data unit set belonging to the logical channel comprises any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

5. The method of claim 4, further comprising:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

6. The method of claim 1, wherein determining the priority of the logical channel based on the initial priority of the logical channel and the priority of the packet data unit set belonging to the logical channel comprises any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

7. The method of claim 6, wherein one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

8. The method of claim 6, further comprising:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

9. The method of claim 1, further comprising:
transmitting assistance information to a network device, wherein the assistance information is used to assist in determining the initial priority of the logical channel.

10. The method of claim 9, wherein the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

11. The method of claim 1, further comprising:
determining, based on configuration information from a network device, a way for determining the priority of the logical channel; or
determining a way for determining the priority of the logical channel.

12. The method of claim 11, wherein determining the way for determining the priority of the logical channel comprises:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

13. The method of claim 1, further comprising:
performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

14. The method of claim 13, wherein the transmission conflict comprises:
a transmission conflict between data transmission corresponding to an uplink and data transmission corresponding to a sidelink; or
a transmission conflict between different configured grants corresponding to an uplink or a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

15. The method of claim 5, 8 or 11, wherein the configuration information is configured based on a Uu interface, or a sidelink, or a Uu interface logical channel, or a sidelink logical channel.

16. A method for determining priority of logical channel, comprising:
transmitting configuration information to a terminal, wherein the configuration information is used to configure a method for determining priority of logical channel performed by the terminal, wherein the method for determining priority of logical channel performed by the terminal comprises:
determining a priority of a logical channel based on an initial priority of a logical channel and/or a priority of a packet data unit set belonging to the logical channel.

17. The method of claim 16, wherein the priority of the packet data unit set belonging to the logical channel comprises:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

18. The method of claim 17, wherein the configuration information comprises a way for determining the priority of the logical channel based on the priority of the packet data unit set belonging to the logical channel.

19. The method of claim 18, wherein the way for determining the priority of the logical channel based on the priority of the packet data unit set belonging to the logical channel comprises any of the following:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to a quantity of packet data unit sets in the buffer, and k is a positive integer.

20. The method of claim 16, wherein the configuration information comprises a way for determining the initial priority of the logical channel and the priority of the logical channel based on the priority of the packet data unit set belonging to the logical channel.

21. The method of claim 20, wherein the way of determining the priority of the logical channel based on the initial priority of the logical channel and the priority of the packet data unit set belonging to the logical channel comprises any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

22. The method of claim 21, further comprising:
configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
transmitting one or more of the initial priority of the logical channel, the weighted coefficient corresponding to the initial priority of the logical channel in the weighted average value, or the weighted coefficient corresponding to the priority of packet data unit set belonging to the logical channel in the weighted average value to the terminal.

23. The method of claim 16, further comprising:
receiving assistance information transmitted from the terminal, wherein the assistance information is used to assist in determining the initial priority of the logical channel.

24. The method of claim 23, wherein the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

25. The method of claim 16, wherein the configuration information is configured based on a Uu interface, or a sidelink, or a Uu interface logical channel, or a sidelink logical channel.

26. A terminal, comprising a memory, a transceiver and a processor,
wherein the memory is used for storing a computer program; the transceiver is used for receiving and transmitting data under control of the processor; and the processor is used for reading the computer program in the memory and performing the following operations:
determining a priority of a logical channel based on an initial priority of the logical channel and/or a priority of a packet data unit set belonging to the logical channel.

27. The terminal of claim 26, wherein the initial priority of the logical channel comprises:
an initial priority of a logical channel configured by a network device; or,
an initial priority of a logical channel determined based on preconfiguration information or system information transmitted from a network device.

28. The terminal of claim 26, wherein the priority of the packet data unit set belonging to the logical channel comprises:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

29. The terminal of claim 28, wherein determining the priority of the logical channel based on the priority of the packet data unit set belonging to the logical channel comprises any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

30. The terminal of claim 29, wherein the processor is used for reading the computer program in the memory and performing the following operations:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

31. The terminal of claim 26, wherein determining the priority of the logical channel based on the initial priority of the logical channel and the priority of the packet data unit set belonging to the logical channel comprises any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

32. The terminal of claim 31, wherein one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

33. The terminal of claim 31, wherein the processor is used for reading the computer program in the memory and performing the following operations:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

34. The terminal of claim 26, wherein the processor is used for reading the computer program in the memory and performing the following operations:
transmitting assistance information to a network device, wherein the assistance information is used to assist in determining the initial priority of the logical channel.

35. The terminal of claim 34, wherein the assistance information comprises at least one of the following:
it is supported, by the terminal, to determine the priority of the logical channel based on a priority of a packet data unit set belonging to the logical channel.
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel;
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

36. The terminal of claim 26, wherein the processor is used for reading the computer program in the memory and performing the following operations:
determining, based on configuration information from a network device, a way for determining the priority of the logical channel; or
determining a way for determining the priority of the logical channel.

37. The terminal of claim 36, wherein determining the way for determining the priority of the logical channel comprises:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

38. The terminal of claim 26, wherein the processor used for reading the computer program in the memory is further used for performing the following operations:
performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

39. The terminal of claim 38, wherein the transmission conflict comprises:
a transmission conflict between data transmission corresponding to an uplink and data transmission corresponding to a sidelink; or
a transmission conflict between different configured grants corresponding to an uplink or a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

40. The terminal of claim 30, 33 or 36, wherein the configuration information is configured based on a Uu interface, or a sidelink, or a Uu interface logical channel, or a sidelink logical channel.

41. A network device, comprising a memory, a transceiver and a processor,
wherein the memory is used for storing a computer program; the transceiver is used for receiving and transmitting data under control of the processor; and the processor is used for reading the computer program in the memory and performing the following operations:
transmitting configuration information to a terminal, wherein the configuration information is used to configure a method for determining priority of logical channel performed by the terminal, wherein the method for determining priority of logical channel performed by the terminal comprises:
determining a priority of a logical channel based on an initial priority of a logical channel and/or a priority of a packet data unit set belonging to the logical channel.

42. The network device of claim 41, wherein the priority of the packet data unit set belonging to the logical channel comprises:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

43. The network device of claim 42, wherein the configuration information comprises a way for determining the priority of the logical channel based on the priority of the packet data unit set belonging to the logical channel.

44. The network device of claim 43, wherein the way for determining the priority of the logical channel based on the priority of the packet data unit set belonging to the logical channel comprises any of the following:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

45. The network device of claim 41, wherein the configuration information comprises a way for determining the initial priority of the logical channel and the priority of the logical channel based on the priority of the packet data unit set belonging to the logical channel.

46. The network device of claim 45, wherein the way of determining the priority of the logical channel based on the initial priority of the logical channel and the priority of the packet data unit set belonging to the logical channel comprises any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

47. The network device of claim 46, wherein the processor is used for reading the computer program in the memory and performing the following operations:
configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
transmitting one or more of the initial priority of the logical channel, the weighted coefficient corresponding to the initial priority of the logical channel in the weighted average value, or the weighted coefficient corresponding to the priority of packet data unit set belonging to the logical channel in the weighted average value to the terminal

48. The network device of claim 41, wherein the processor is used for reading the computer program in the memory and performing the following operations:
receiving assistance information transmitted from the terminal, wherein the assistance information is used to assist in determining the initial priority of the logical channel.

49. The network device of claim 48, wherein the assistance information comprises at least one of the following:
it is supported, by the terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

50. The method of claim 41, wherein the configuration information is configured based on a Uu interface, or a sidelink, or a Uu interface logical channel, or a sidelink logical channel.

51. An apparatus for determining priority of logical channel, comprising:
a determining unit, used for determining a priority of a logical channel based on an initial priority of the logical channel and/or a priority of a packet data unit set belonging to the logical channel.

52. The apparatus of claim 51, wherein the initial priority of the logical channel comprises:
an initial priority of a logical channel configured by a network device; or,
an initial priority of a logical channel determined based on preconfiguration information or system information transmitted from a network device.

53. The apparatus of claim 51, wherein the priority of the packet data unit set belonging to the logical channel comprises:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

54. The apparatus of claim 53, wherein determining the priority of the logical channel based on the priority of the packet data unit set belonging to the logical channel comprises any of the following ways:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

55. The apparatus of claim 54, further comprising a second determining unit used for:
determining, based on configuration information from a network device, a way of determining the priority of the logical channel based on the priority of the packet data unit set belonging to the logical channel; or
determining a way of determining the priority of the logical channel based on the priority of the packet data unit set belonging to the logical channel.

56. The apparatus of claim 51, wherein determining the priority of the logical channel based on the initial priority of the logical channel and the priority of the packet data unit set belonging to the logical channel comprises any of the following ways:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

57. The apparatus of claim 56, wherein one or more of the initial priority of the logical channel, a weighted coefficient corresponding to the initial priority of the logical channel in the weighted average value, or a weighted coefficient corresponding to the priority of packet data unit set belonging to the logical channel in the weighted average value are configured by a network device based on a Uu interface, or a sidelink, or a Uu interface logical channel, or a sidelink logical channel.

58. The apparatus of claim 56, further comprising a third determining unit used for:
determining, based on configuration information from a network device, a way of determining the priority of the logical channel based on the initial priority of the logical channel and the priority of the packet data unit set belonging to the logical channel; or
determining a way of determining the priority of the logical channel based on the initial priority of the logical channel and the priority of the packet data unit set belonging to the logical channel.

59. The apparatus of claim 51, further comprising:
a transmitting unit, used for transmitting assistance information to a network device, wherein the assistance information is used to assist in determining the initial priority of the logical channel.

60. The apparatus of claim 59, wherein the assistance information comprises at least one of the following:
it is supported, by a terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

61. The apparatus of claim 51, further comprising a fourth determining unit used for:
determining, based on configuration information from a network device, a device for determining the priority of the logical channel; or
determining a device for determining the priority of the logical channel.

62. The apparatus of claim 61, wherein the first determining unit is used for:
in case that differences between initial priorities of multiple logical channels are less than a first threshold, determining the priority of the logical channel based on the priority of the packet data unit set belonging to the logical channel; or
in case that differences between initial priorities of multiple logical channels are higher than a second threshold, determining the priority of the logical channel based on the initial priority of the logical channel and the priority of the packet data unit set belonging to the logical channel; or
in case that differences between priorities of multiple packet data unit sets belonging to the logical channel are less than a third threshold, determining the priority of the logical channel based on the initial priority of the logical channel; or
in case that differences between priorities of multiple packet data unit sets belonging to the logical channel are higher than a fourth threshold, determining the priority of the logical channel based on the initial priority of the logical channel.

63. The apparatus of claim 51, further comprising:
a performing unit, used for performing at least one of the following procedures based on the priority of the logical channel:
an uplink logical channel prioritization (LCP) procedure;
a sidelink logical channel prioritization (LCP) procedure;
a resource selection procedure in sidelink mode 2; or
a resolution procedure of a transmission conflict.

64. The apparatus of claim 63, wherein the transmission conflict comprises:
a transmission conflict between data transmission corresponding to an uplink and data transmission corresponding to a sidelink; or
a transmission conflict between different configured grants corresponding to an uplink or a sidelink; or
a transmission conflict between a configured grant and a dynamic scheduling grant corresponding to an uplink; or
a transmission conflict between a configured grant and a dynamic scheduling grant corresponding to a sidelink; or
a transmission conflict between data transmission and a measurement interval corresponding to an uplink; or
a transmission conflict between data transmission and a measurement interval corresponding to a sidelink.

65. The apparatus of claim 55, 58 or 61, wherein the configuration information is configured based on a Uu interface, or a sidelink, or a Uu interface logical channel, or a sidelink logical channel.

66. An apparatus for determining priority of logical channel, comprising:
a first transmitting unit, used for transmitting configuration information to a terminal, wherein the configuration information is used to configure a method for determining priority of logical channel performed by the terminal, wherein the method for determining priority of logical channel performed by the terminal comprises:
determining a priority of a logical channel based on an initial priority of a logical channel and/or a priority of a packet data unit set belonging to the logical channel.

67. The apparatus of claim 66, wherein the priority of the packet data unit set belonging to the logical channel comprises:
a priority of a first packet data unit set in a buffer corresponding to the logical channel; or
a highest priority among priorities of first N packet data unit sets in a buffer corresponding to the logical channel; or
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

68. The apparatus of claim 67, wherein the configuration information comprises a way for determining the priority of the logical channel based on the priority of the packet data unit set belonging to the logical channel.

69. The apparatus of claim 68, wherein the way for determining the priority of the logical channel based on the priority of the packet data unit set belonging to the logical channel comprises any of the following:
determining the priority of the logical channel based on the priority of the first packet data unit set in the buffer corresponding to the logical channel; or
determining the priority of the logical channel based on the highest priority among the priorities of first N packet data unit sets in the buffer corresponding to the logical channel; or
determining the priority of the logical channel based on the weighted average value of the priorities of first N packet data unit sets in the buffer corresponding to the logical channel; or
determining the priority of the logical channel based on the highest priority among the priorities of at least k packet data unit sets among the first N packet data unit sets in the buffer corresponding to the logical channel;
N is a positive integer and is less than or equal to the quantity of packet data unit sets in the buffer, and k is a positive integer.

70. The apparatus of claim 66, wherein the configuration information comprises a way for determining the initial priority of the logical channel and the priority of the logical channel based on the priority of the packet data unit set belonging to the logical channel.

71. The apparatus of claim 70, wherein the way of determining the priority of the logical channel based on the initial priority of the logical channel and the priority of the packet data unit set belonging to the logical channel comprises any of the following:
determining a highest value among the initial priority of the logical channel and priorities of packet data unit sets belonging to the logical channel to be the priority of the logical channel; or
determining a weighted average value of the initial priority of the logical channel and priorities of packet data unit sets belonging to the logical channel to be the priority of the logical channel.

72. The apparatus of claim 71, further comprising:
a configuring unit, used for configuring, based on a Uu interface, or a sidelink, or a Uu interface logical channel, or a sidelink logical channel, one or more of the initial priority of the logical channel, a weighted coefficient corresponding to the initial priority of the logical channel in the weighted average value, or a weighted coefficient corresponding to the priority of packet data unit set belonging to the logical channel in the weighted average value; and
a second transmitting unit, used for transmitting one or more of the initial priority of the logical channel, the weighted coefficient corresponding to the initial priority of the logical channel in the weighted average value, or the weighted coefficient corresponding to the priority of packet data unit set belonging to the logical channel in the weighted average value to the terminal.

73. The apparatus of claim 66, further comprising:
a receiving unit, used for receiving assistance information transmitted from the terminal, wherein the assistance information is used to assist in determining the initial priority of the logical channel.

74. The apparatus of claim 73, wherein the assistance information comprises at least one of the following:
it is supported, by the terminal, to determine the priority of the logical channel based on a priority of a packet data unit set belonging to the logical channel;
a candidate priority set of each packet data unit set belonging to the logical channel;
a highest priority in a candidate priority set of each packet data unit set belonging to the logical channel;
a priority of a first packet data unit set in a buffer corresponding to the logical channel;
a highest priority among priorities of first N packet data unit sets in a buffer corresponding to the logical channel;
a weighted average value of priorities of first N packet data unit sets in a buffer corresponding to the logical channel; or
a highest priority among priorities of at least k packet data unit sets among first N packet data unit sets in a buffer corresponding to the logical channel;
N is a positive integer and is less than or equal to a quantity of packet data unit sets in the buffer, and k is a positive integer.

75. The apparatus of claim 66, wherein the configuration information is configured based on a Uu interface, or a sidelink, or a Uu interface logical channel, or a sidelink logical channel.

76. A computer-readable storage medium, wherein the computer-readable storage medium stores a computer program, and the computer program causes a computer to perform the method of any of claims 1 to 15 or the method of any of claims 16 to 25.
